# EUROPEAN PATENT SPECIFICATION

(11) **EP 1 933 260 B1**
(45) Date of publication and mention of the grant of the patent: **12.08.2015**
(21) Application number: 07122508.0
(22) Date of filing: 06.12.2007
(51) Int. Cl.: G06K 19/07, G06K 19/077, G06K 7/00, G06K 7/10, G06K 17/00, G06Q 10/00

(54) **RFID based monitoring system and method**
System und Verfahren zur RFID-basierten Überwachung
Système et procédé de surveillance à base de RFID

(30) Priority: 07.12.2006 CA 2570616
(43) Date of publication of application: 18.06.2008
(73) Proprietor: Psion Inc., Mississauga, ON L5N 7J9 (CA)
(72) Inventor: Porte, Philippe, 13090 Aix en Provence (FR); Bonnefoy, Pierre, 13600 Ceyreste (FR)
(74) Representative: Treleven, Colin

(56) References cited:
- EP-A1- 1 672 560
- DE-A1- 10 113 719
- US-A1- 2003 122 655

## Description

### FIELD OF INVENTION

The present invention relates to Radio Frequency Identification (RFID) technology, and more specifically to RFID based monitoring system and method.

### BACKGROUND OF THE INVENTION

The process of tracking items requires that each item have its own readable information. Conventionally, each item is marked locally with a visible serial number, which is printed on a label, or is used with a bar code having a machine-readable serial number. Such serial numbers may be correctly read when the items are located so that the serial numbers on the items can be visually observed or be scanned by a bar code scanner. However, manual reading may introduce errors. Further, the items may be in a shield boundary (e.g., cabinet) and are not easily accessible from outside. In this case, it is necessary to open the boundary to read the serial number on each item.

Radio frequency identification (RFID) tags function as contactless markers. Each RFID tag has its own unique identification or identifier (ID). The IDs on the RFID tags are read by an RFID reader using RF signals, and can be used for inventory purpose. Items having the RFID tags can be tracked using the IDs of the tags. The RFID tags can be either active or passive RFID tags. An active RFID tag is used in a variaty of applications since the active RFID tag has its own internal power source. However, the size and cost for the active RFID tag is high. In addition, when tracking items in the shield boundary, there is no way to know how many active RFID tags will answer to the RFID reader. Moreover, there may be a confusion between the items supposed to be read and the IDs obtained. The operator of the RFID reader may not know the items in the boundary. The operator may not know where the items are in the boundary.

Therefore, there exists a need for a method and system to improve the access to the item's ID. There is also a need for a method and system to improve the time to scan/read the ID among multiple IDs for inventory purpose. DE10113719 A1 provides a system for monitoring components in a car. The system includes a receiver, and a transponder for transmitting data from the components to the receiver. EP1672560 A1 provides an inductive identification system having a transponder, a 'transmitter and receiver' device, and a coupling unit for communication between the transponder and the 'transmitter and receiver' device. US2003/122655 A1 provides a short range communication system having an interrogator, transponders, and coupling ports for communication between the interrogator and the transponders.

### SUMMARY OF THE INVENTION

It is an object of the invention to provide a method and system that obviates or mitigates at least one of the disadvantages/limitations of existing systems. In accordance with a first aspect of the invention, an apparatus having the features of appended claim 1 is provided. In accordance with a second aspect of the invention, an apparatus having the features of appended claim 19 is provided. In accordance with a third aspect of the invention, a method having the steps of appended claim 20 is provided. The dependent claims provide details of features and steps of embodiments.

In accordance with an aspect of the present invention, there is provided a system for monitoring one or more than one item. The system includes a master tag operable in an RF field of an RFID reader, and a connection system for accessing one or more than one marker tag allocated to the one or more than one item, respectively, through conductive coupling. Each of the one or more than one marker tag includes a unique ID and is operable by the RFID reader. The connection system is conductively coupled with the master tag and includes a cable for coupling each of the one or more than one marker tags to the master tag, so that the one or more than one marker tag is readable through the conductive coupling by the RFID reader.

In accordance with another aspect of the present invention, there is provided a system for monitoring an item. The system includes a tag module having a unique ID and a first antenna. The tag module is operable by an RFID reader. The system includes a second antenna for accessing the tag module. The second antenna is conductively coupled, through conductive coupling with a master tag operable in an RF field of the RFID reader. The second antenna is inductively coupled with the first antenna, so that the tag module is readable through a combination of conductive and inductive coupling by the RFID reader.

In accordance with a further aspect of the present invention, there is provided a method of monitoring one or more than one item. The method includes allocating one or more than one marker tag to the one or more than one item, respectively. Each of the one or more than one marker tag includes a unique ID and is operable by an RFID reader. The method includes accessing the one or more than one marker tag through conductive coupling. The step of accessing includes conductively coupling a master tag operable by the RFID with a connection system for accessing the one or more than one marker tag via a cable, and reading the one or more than one marker tag with the RFID reader through the master tag.

This summary of the invention does not necessarily describe all features of the invention.

### BRIEF DESCRIPTION OF THE DRAWINGS

These and other features of the invention will become more apparent from the following description in which reference is made to the appended drawings wherein:
Figure 1 is a schematic diagram illustrating an example of a monitoring system in accordance with an embodiment of the present invention;
Figure 2 is a schematic diagram illustrating an example of a marker tag of Figure 1;
Figure 3 is a schematic diagram illustrating an example of a master tag of Figure 1;
Figure 4 is a schematic diagram illustrating an example of a coupling among an RFID reader, the master tag and the marker tag;
Figure 5 is a schematic diagram illustrating another example of the master tag of Figure 1;
Figure 6 is a schematic diagram illustrating another example of the coupling among the RFID reader, the master tag and the marker tag;
Figure 7A is a perspective view illustrating an example of the layered structure of the marker tag;
Figure 7B is a schematic diagram illustrating an example of one layer of Figure 7A;
Figure 7C is a schematic diagram illustrating an example of another layer of Figure 7A;
Figure 8 is a schematic diagram illustrating an exemplary scenario applied to the system of Figure 1;
Figure 9 is a flowchart illustrating an example of a method of operating the monitoring system of Figure 1;
Figure 10 is a flowchart illustrating an example of a method for read mode operation for the monitoring system of Figure 1;
Figure 11 is a flowchart illustrating an example of a method for read mode operation for the monitoring system of Figure 1;
Figure 12 is a schematic diagram illustrating an example of a monitoring system in accordance with another embodiment of the present invention;
Figure 13 is a schematic diagram illustrating an exemplary scenario applied to the system of Figure 12; and
Figure 14 is a schematic diagram illustrating an example of a monitoring system in accordance with another embodiment of the present invention.

### DETAILED DESCRIPTION

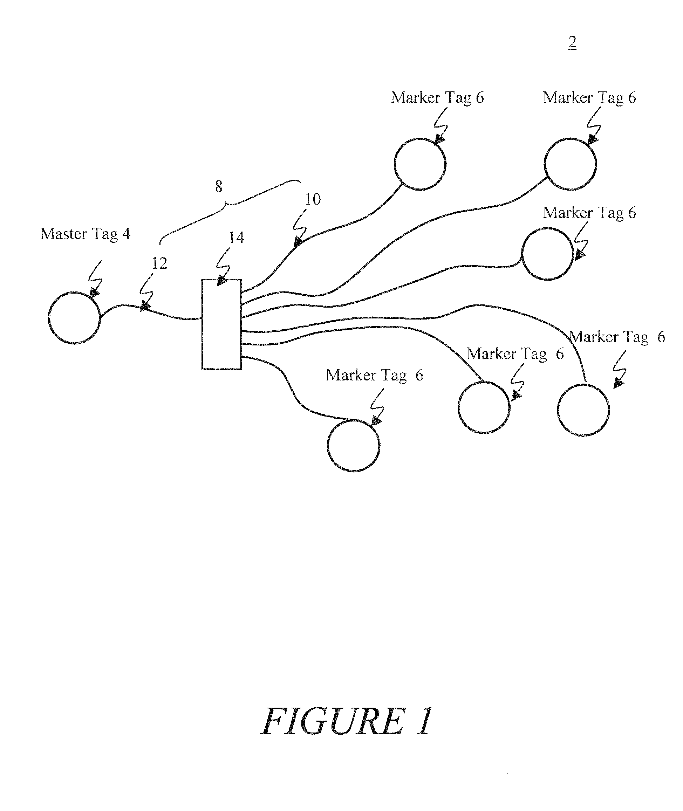

Figure 1 illustrates an example of a monitoring system 2 in accordance with an embodiment of the present invention. The system 2 includes a master tag 4 and a group of marker tags 6. The marker tag 6 is a tag containing a unique ID. The marker tag 6 is applied to an item that is to be traced. The master tag 4 is an entry point providing access to a group of marker tags 6, through the RF field of an RFID reader. In the description, the terms "monitor", "track" and "trace" may be used interchangeably. In the description, "6" may represent "(individual) marker tag" or "marker tags".

Each marker tag 6 is physically connected to the master tag 4 via a wired connection system 8. The wired connection system 8 is a conductive-coupling module for coupling between the master tag 4 and the marker tags 6. In the description, the terms "connect (or connected)", "couple (or coupled) " and "link (linked)" may be used interchangeably, and may indicate that two or more elements are directly or indirectly in contact with each other.

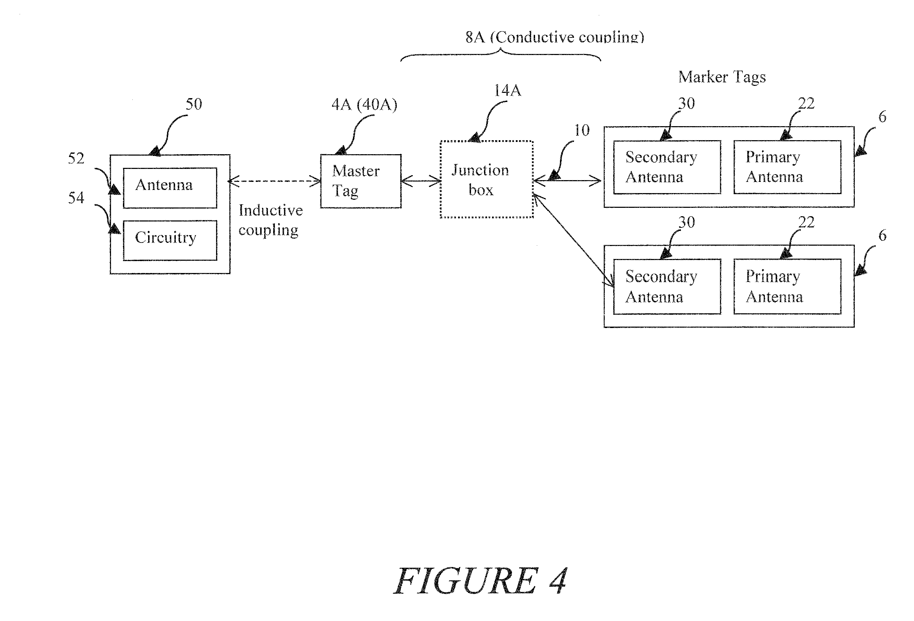

The wired connection system 8 includes a cable 10 that is detachably connected to the marker tag 6. The wired connection system 8 may include a connection module 14 for dispatching signals on the marker tags 6. The connection module 14 may be a junction box (e.g., 14A of Figures 4, 6 and 8). The junction box allows grouping all the connexions of the marker tags 6 to the single master tag 4.

The wired connection system 8 may further include a cable 12 for connecting the master tag 4 to the connection module 14. However, in another example, the master tag 4 may be directly wired-connected to the marker tag 6 without using the connection module 14.

The cable 10 may be a twisted pair cable or a coax cable. The cable 12 may be a twisted pair cable or a coax cable. The coax cable provides a long distance wired communication line for tags.

The master tag 4 is operable in the RF field of the RFID reader (e.g., 50 of Figures 4, 6, and 8). When the master tag 4 is within the RF field of the RFID reader, the marker tags 6 are activated through the wired connection system 8. Data signals output from the RFID reader are transferred to the master tag 4, and then to the marker tags through the wired connection system 8. The marker tag 6 contains readable or readable/writable information (e.g., ID, information associated with an item to be tracked). The information read from the marker tag 6 is transmitted to the master tag 4 through the wired connection system 8.

The system 2 allows for an automatic "on the fly" reading of the information stored in the marker tag 6 through the master tag 4. In addition, the marker tags 6 are repaired through the master tag 4. Information stored in the marker tag 6 is replaced through the master tag 4. The marker tags 6 are controlled through the single entry point, i.e., the master tag 4.

For example, the marker tags 6 may be used to tag items in an enclosure (e.g., a container, a box), which are not easily accessible from outside of the enclosure. In this case, the master tag 4 is located at a place where it is easily readable, and is used to collect information from the marker tags 6. The marker tag 6 and the corresponding item are immediately checked and tracked through the master tag 4. The marker tag 6 is detachable connected to the wired connection system 8. Thus, the item and its marker tag can be easily replaced with a new item and its new tag, respectively.

In Figure 1, six marker tags 6 are shown. However, the number of the marker tags 6 is not limited to six and may vary in dependence upon the system design or requirements. In Figure 1, one master tag 4 is shown. However, the number of the master tag 4 is not limited to one and may vary in dependence upon the system design or requirements. In another example, one master tag 4 may be connected to one marker tag 6 in a one to one relationship.

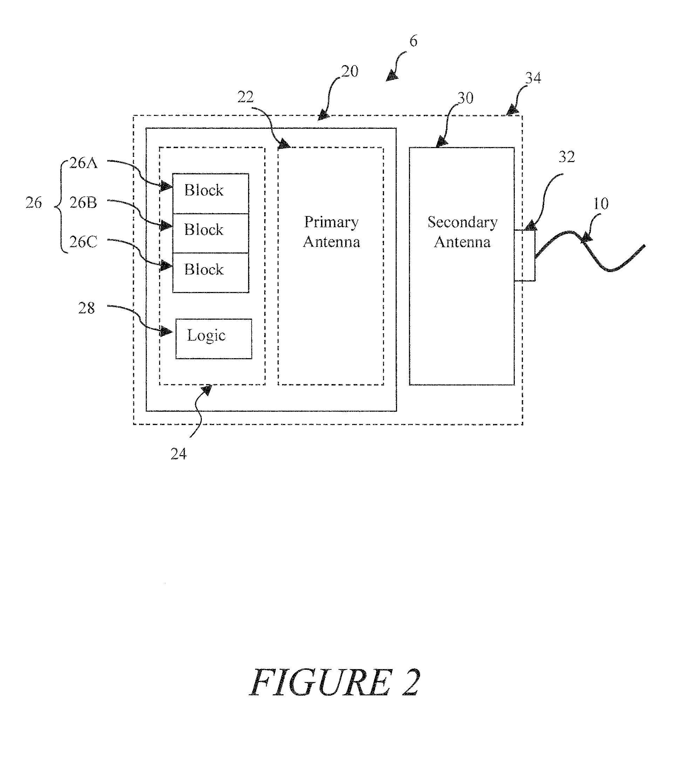

The marker tag 6 of Figure 1 is described in detail. Figure 2 illustrates an example of the marker tag 6 of Figure 1. Referring to Figure 2, the marker tag 6 includes a tag module 20. The tag module 20 includes an antenna system having a primary antenna 22 and a chip 24. The primary antenna 22 may be a coil antenna. The chip 24 has a unique address and can be addressed uniquely through a tag protocol. The tag module 20 is accessed through the primary antenna 22.

The marker tag 6 further includes a secondary antenna 30. The secondary antenna 30 may be a coil antenna. The secondary antenna 30 may be same or similar to the primary antenna 22. The secondary antenna 30 is connected to the cable 10. The secondary antenna 30 is located physically near the primary antenna 22, however, not electrically connected to the primary antenna 22.

The primary antenna 22 and the secondary antenna 30 are inductively coupled, and have functionality similar to a voltage transformer. The primary antenna 22 and the secondary antenna 30 are positioned so that the magnetic field crossing one of the antennas will cross in the same manner the other antenna. The secondary antenna 30 turns on the resonant frequency same as that of the primary antenna 22. All energy/signals can be transfer from one of the antennas to the other antenna.

The tag module 20 communicates with RFID readers (e.g., 50 of Figures 4, 6, and 8) using the cable 10. The tag module 20 may commutate with the RFID readers using RF signals through the secondary antenna 30, the primary antenna 22 or a combination thereof. For communications between an RFID reader and the marker tag 6, "Tag-Talks-First (TTF)" protocol or "Reader-Talks-First (RTF)" protocol may be used. The tag module 20 employs a standard design of RFID circuit and operates in accordance with ISO tag standards, such as ISO 15693 protocols.

The tag module 20 is a passive RFID tag. The tag module 20 derives its energy based on signals received through the cable 10 or signals directly received by the marker tag 6 (e.g., the primary antenna 22, the secondary antenna 30).

The tag module 20 may be an RFID read tag or an RFID read/write tag, which is operable by the RFID readers. The chip 24 includes a memory 26 and a logic section 28 for reading from the memory 26 or reading and writing to the memory 26. The memory 26 includes a plurality of memory blocks, each of which is selectively readable or readable and writeable. In Figure 2, three memory blocks 26A, 26B and 26C are shown. However, the number of the memory blocks may vary in dependence upon the system design. The memory 26 may include one memory block. The memory 26 stores a unique ID that is used as the tag's unique address. An RFID reader uses the unique ID allocated to the marker tag 6 to identify that tag or an item to which the tag is affixed, and to select the tag. The memory 26 may further store data, such as time dependent information (e.g., date) and information on the item or tag (e.g., configuration).

The memory 26 may include a Read-Only Memory (ROM), a Random Access Memory (RAM) and a Non-Volatile Programmable Memory. The Non-Volatile Programmable Memory may take various forms, e.g., Electrically Erasable Programmable Read Only Memory (EEPROM).

In Figure 2, the primary antenna 22 and the chip 24 are shown separately from each other. However, the primary antenna 22 and the chip 24 may be integrated into one circuit board and may be in physical or electrical or magnetic contact with each other. In Figure 2, the memory 26 and the logic section 28 are shown separately from each other. However, the memory 26 and the logic section 28 may be integrated into one single integrated circuit.

The secondary antenna 30 is connected to the cable 10 through a connector 32. The connector 32 is attached to the cable 10. The marker tag 6 is detachably connected to the connector 32 so that the marker tag 6 can be easily separated from the connector 32 and may be replaced with a new marker tag. In order for the replacement, an operator plugs the connector 32 to the new marker tag 6. In another example, the secondary antenna 30 may be directly connected to the cable 10 without using the connector 32.

The tag module 20 and the secondary antenna 30 are in a package 34, and form a single module. However, in another example, the secondary antenna 30 may be provided separately from the tag module 20 and be located outside the package 34.

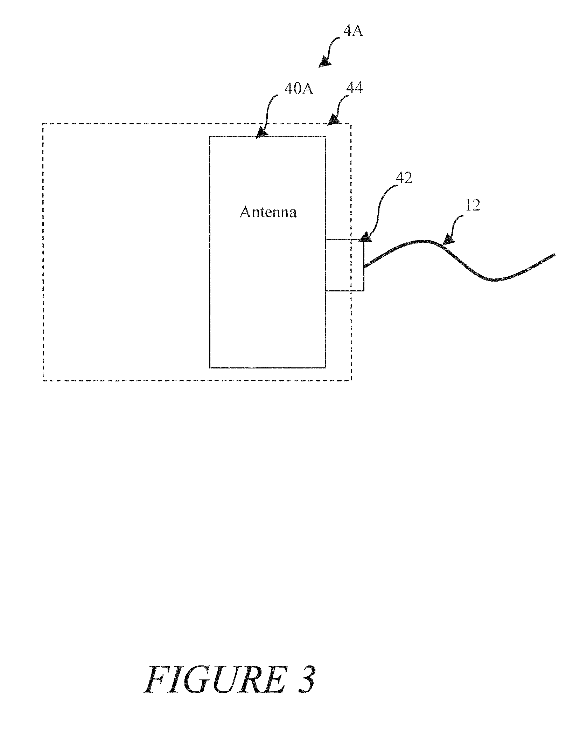

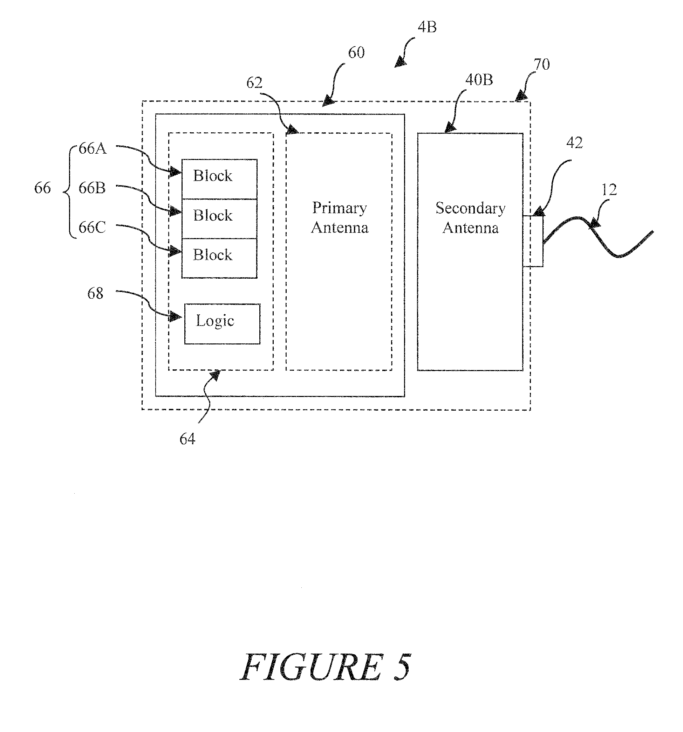

The master tag 4 of Figure 1 is described in detail. The master tag 4 includes an antenna connected to the cable 12, and may have no RF tag function (Figure 3). The master tag 4 may include a full standard RFID tag in addition to the antenna (Figure 5)

Figure 3 illustrates an example of the master tag 4 of Figure 1. The master tag 4A of Figure 3 includes an antenna 40A. The antenna 40A is coupled with the cable 12 through a connector 42. The connector 42 may be same or similar to the connector 32 of Figure 2. The master tag 4A may be detachably connected to the connector 42. In another example, the master tag 4A may be directly connected to the cable 12. The antenna 40A may be on a Printed Circuit Board (PCB) or in a package (44). The antenna 40A may be a coil antenna. The antenna 40A may be same or similar to the secondary antenna 30 of Figure 2.

Figure 4 illustrates an example of a coupling among an RFID reader, the master tag 4A and the marker tag 6. The RFID reader 50 of Figure 4 includes an antenna 52 for communicating with tags and reader circuitry 54. The antenna 52 may be a coil antenna. The RFID reader 50 may include a battery and the antenna 52 may be battery powered. The RFID reader 50 implements read operations on tags. The RFID reader 50 may implement write operations on the tags. The antenna 40A of the master tag 4A is inductive-coupled with the RFID reader antenna 52. In the description, "antenna 52" and "RFID reader antenna 52" are used interchangeably.

The marker tags 6 communicate with the master tag 4A through a wired connection system 8A. The wired connection system 8A corresponds to the wired connection system 8 of Figure 1 and includes a junction box 14A. The junction box 14A corresponds to the connection module 14 of Figure 1. The junction box 14A may be a pure connecting box, or may be made of electronic components (e.g., capacitors and inductors), to split the signal into several channels, for each marker tag 6. The junction box 14A is a passive device, which can be seen as a signal splitter.

In Figure 4, two marker tags 6 are shown. However, the number of the marker tags 6 is not limited to two and may vary in dependence upon the system design or requirements. In Figure 4, one master tag 4A is shown. However, the number of the master tag 4A is not limited to one and may vary in dependence upon the system design or requirements. The system may include a plurality of master tags 4A, each being coupled with a different group of marker tags 6.

The RFID reader antenna 52 creates an electro-magnetic field. When the master tag 4A is located within the electro-magnetic field, the marker tag 6 is activated (powered up) through the wired connection system 8A (conductive-coupling). Based on the outputs from the RFID reader 50, High Frequency (HF) signals are circulated from the master tag 4A to the secondary antenna 30 of each marker tag 6. Data signals from the RFID reader 50 are transmitted to the marker tag 6 through the wired connection system 8A. Information read from the tag module (20 of Figure 3) of the marker tag 6 is transmitted through the wired connection system 8A to the master tag 4A. The master tag 4A is coupled with the RFID antenna 52. Thus, the RFID reader 50 receives the information read from the marker tag 6 through the master tag 4A.

In Figure 4, the marker tag 6 communicates with the RFID reader 50 using the master tag 4A. However, the marker tag 6 may directly communicate with the RFID reader 50. In Figure 4, the master tag 4A is connected to the marker tag 6 through the junction box 14A. However, the master tag 4A may be directly connected to the marker tag 6.

Figure 5 illustrates another example of the master tag 4 of Figure 1. The master tag 4B of Figure 5 includes a secondary antenna 40B and a tag module 60. The secondary antenna 40B may be same or similar to the antenna 40A of Figure 3, and may be a coil antenna. The tag module 60 may be same or similar to the tag module 20 of Figure 2. The tag module 60 includes an antenna system having a primary antenna 62 and a chip 64. The primary antenna 62 may be same or similar to the primary antenna 22 of Figure 2, and may be a coil antenna. The chip 64 may be same or similar to the chip 24 of Figure 2. The chip 64 has a unique address and can be addressed uniquely through a tag protocol. The tag module 60 is accessed through the primary antenna 62.

The secondary antenna 40B is located physically near the primary antenna 62 to implement inductive-coupling, however, not electrically connected to the primary antenna 62. The primary antenna 62 and the secondary antenna 40B have functionality similar to a voltage transformer. The primary antenna 62 and the secondary antenna 40B are positioned so that the magnetic field crossing one of the antennas will cross in the same manner the other antenna. The secondary antenna 40B turns on the resonant frequency same as that of the primary antenna 62. All energy/signals can be transfer from one of the antennas to the other antenna.

The tag module 60 may be an RFID read tag or an RFID read/write tag, which is operable by RFID readers (e.g., 50 of Figures 4, 6, and 8). The tag module 60 may be a passive tag or an active tag that includes a battery.

The chip 64 includes a memory 66 and a logic section 68 for reading from the memory 66 or reading and writing to the memory 66. The memory 66 includes a plurality of memory blocks, each of which is selectively readable or readable and writeable. In Figure 5, three memory blocks 66A, 66B and 66C are shown. However, the number of the memory blocks may vary in dependence upon the system design. The memory 66 may include one memory block. The memory 66 stores a unique ID that is used as the tag's unique address. An RFID reader uses the unique ID allocated to the master tag 4B to identify that tag or an item to which the tag is affixed, and to select the tag. The memory 66 may further store data, such as time dependent information (e.g., date) and information on the item or tag (e.g., configuration).

The tag module 60 may communicate with RFID readers directly through the primary antenna 62 or through the secondary antenna 40B. For communications between an RFID reader and the tag module 60, "Tag-Talks-First (TTF)" protocol or "Reader-Talks-First (RTF)" protocol may be used. The tag module 60 employs a standard design of RFID circuit and operates in accordance with ISO tag standards, such as ISO 15693 protocols.

In Figure 5, the primary antenna 62 and the chip 64 are shown separately from each other. However, the primary antenna 62 and the chip 64 may be integrated into one circuit board and may be in physical or electrical or magnetic contact with each other. In Figure 5, the memory 66 and the logic section 68 are shown separately from each other. However, the memory 66 and the logic section 68 may be integrated into one single integrated circuit.

The tag module 60 and the secondary antenna 40B may be in a package 70, and form a single module. However, in another example, the secondary antenna 40B may be provided separately from the tag module 60 and be located outside the package 70.

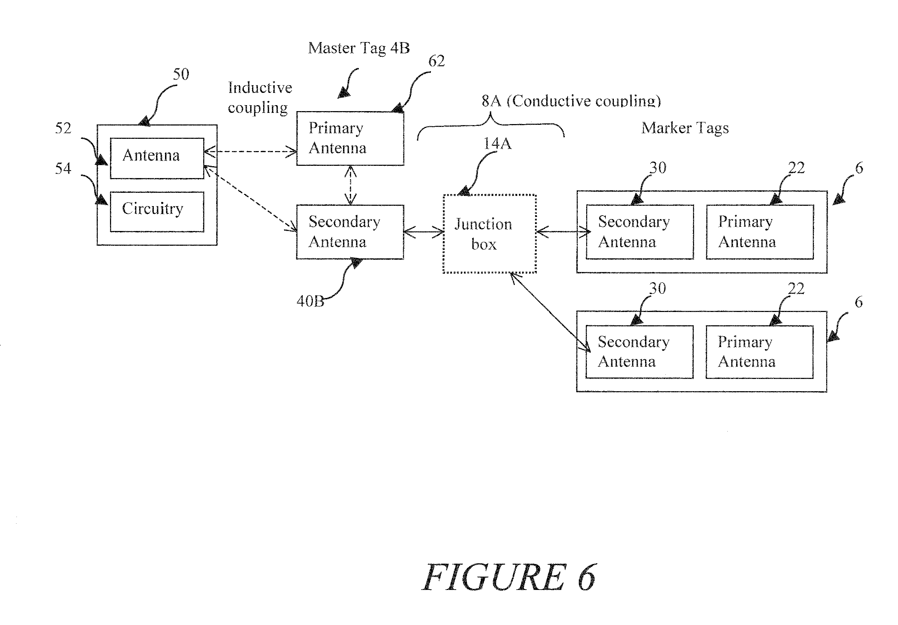

Figure 6 illustrates an example of a coupling among the RFID reader, the master tag 4B and the marker tag 6. In Figure 6, the primary antenna 62 and the secondary antenna 40B may form a single module in a package (e.g., 70 of Figure 5) or may be different modules. The RFID reader antenna 52, the primary antenna 62 of the master tag 4B and the secondary antenna 40B of the master tag 4B are in close inductive-coupling so that any energy or data signals transmitted from one antenna is received on the other antennas. In this example, the ID of the master tag 4B represents a group of the marker tags 6.

The marker tags 6 communicate with the master tag 4B through the wired connection system 8A. The secondary antenna 40B of the master tag 4B is conductively coupled with the secondary antenna 30 of the marker tag 6.

In Figure 6, two marker tags 6 are shown. However, the number of the marker tags 6 is not limited to two and may vary in dependence upon the system design or requirements. In Figure 6, one master tag 4B is shown. However, the number of the master tag 4B is not limited to one and may vary in dependence upon the system design or requirements. The system may include a plurality of master tags 4B, and the ID of each master tag 4B may represent a different group of marker tags 6.

When the RFID reader 50 outputs RF signals, both of the primary antenna 62 and the secondary antenna 40B receive the RF signals, because of the proximity. The RFID reader 50 acts as an emitter and both of the antennas 40B and 62 in the master tag 4B act as receivers or dual secondary antennas. It is similar to a transformer having three coil-antennas.

When the marker tag 6 is activated through the wired connection system 8A (conductive-coupling), any coding read from the marker tag 6 is transmitted through the wired connection system 8A to the secondary antenna 40B of the master tag 4B. The secondary antenna 40B is coupled to the primary antenna 62 and the RFID reader antenna 52. Thus, the RFID reader 50 receives information read from the marker tag 6. The RFID reader 50 may receive information read from the tag module (60) of the master tag 4B.

The RFID reader 50 communicates with both of the primary antenna 62 and the secondary antenna 40B in the master tag 4B at the same time. After that, the coupling among these antennas depends on a geometric balance, such as the sizes of their coils and distances among the coils. The RFID reader 50 may directly or indirectly communicate with the secondary antenna 40B, the primary antenna 62 or a combination thereof.

The primary 62 may be a large size coil. In this example, the large size coil (primary antenna) 62 grasps the energy generated by the RFID reader 50 and then transfers it to the secondary antenna 40B. The distance between the RFID reader antenna 52 and the primary antenna 62 or the distance between the RFID reader antenna 52 and the secondary antenna 40B may be larger than the distance between the primary antenna 62 and the secondary antenna 40, due to ergonomics/practical reasons.

In Figure 6, the marker tag 6 communicates with the RFID reader 50 using the master tag 4B through the wired cable (conductive-coupling) 8A. However, the marker tag 6 may directly communicate with the RFID reader 50. In Figure 6, the master tag 4B is connected to the marker tag 6 through the junction box 14A. However, the master tag 4B may be directly connected to the marker tag 6.

Referring to Figure 1, the system 2 uses a simultaneous multiple access function, called anti-collision algorithm for operating on a plurality of tags. The tag anti-collision function may be implemented in the tag/reader protocol, allowing all tags to be addressed in a one by one manner, with a time slot system. For example, the system 2 may employ anti-collision mechanism in accordance with the standard ISO 15693-3.

The RFID reader (e.g., 50 of Figures 4, 6, and 8) has an RFID tag protocol that defines how to address a particular tag, how to read the ID, or how to read a particular memory block of that particular tag. All that protocol is part of standard tag protocol. All of the tags are activated, however, selective read/write to specific addresses can be achieved.

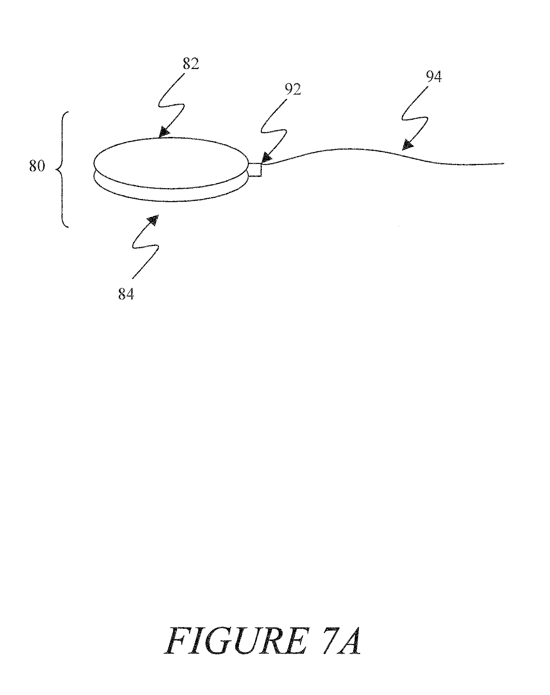

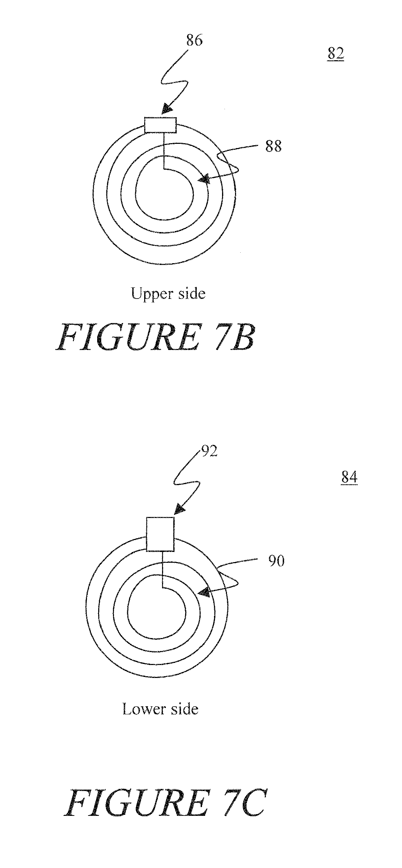

Figures 7A-7C illustrate an example of the structure of the marker tag 6 of Figure 1. The tag of Figures 7A-7C is made of a multilayer PCB 80. In Figures 7A-7C, the PCB 80 has two layers 82 and 84. On one side of the PCB, i.e., one layer 82, there is a chip 86 and a primary coil 88. On the other side of the PCB, i.e., the other layer 84, there is a secondary coil 90 and a wire connexion having a connector 92. The chip 86 corresponds to the chip 24 of Figure 2. The primary coil 88 corresponds to the primary antenna 22 of Figure 2. The secondary coil 90 corresponds to the secondary antenna 30 of Figure 2. The primary coil 88 and the secondary coil 90 are inductively coupled. The secondary coil 90 is connected to a cable through the wire connector 92. The connector 92 corresponds to the connector 32 of Figure 2. The connector 92 may be a small Surface Mount Device (SMD) type connector, to connect the layer 84 on the PCB to a double wire (e.g., cable 10 of Figure 1). There are no connexions between the first layer 82 and the second layer 84.

One of ordinary skill in the art will understand that the representation of the primary coil 88 and the secondary coil 90 is schematic only, and the actual configuration of the primary coil 88 and the secondary coil 90 may take on a variety of configurations.

In this example, the interface to the tag is implemented at the connector level, and the tag and its associated secondary antenna is designed on the same unitary component. The marker tag 6 is activated as soon as its connector 92 is linked to the master tag and the HF signal propagates into the wire cable (conductive coupling) through the connector 92.

The master tag 4B of Figure 5 may have the structure that is same or similar to that of Figures 7A-7C. In this example, the primary coil 88 corresponds to the primary antenna 62 of Figure 5, the chip 86 corresponds to the chip 64 of Figure 5, the secondary coil 90 corresponds to the secondary antenna 40B of Figure 5, and the connector 92 corresponds to the connector 42 of Figure 5.

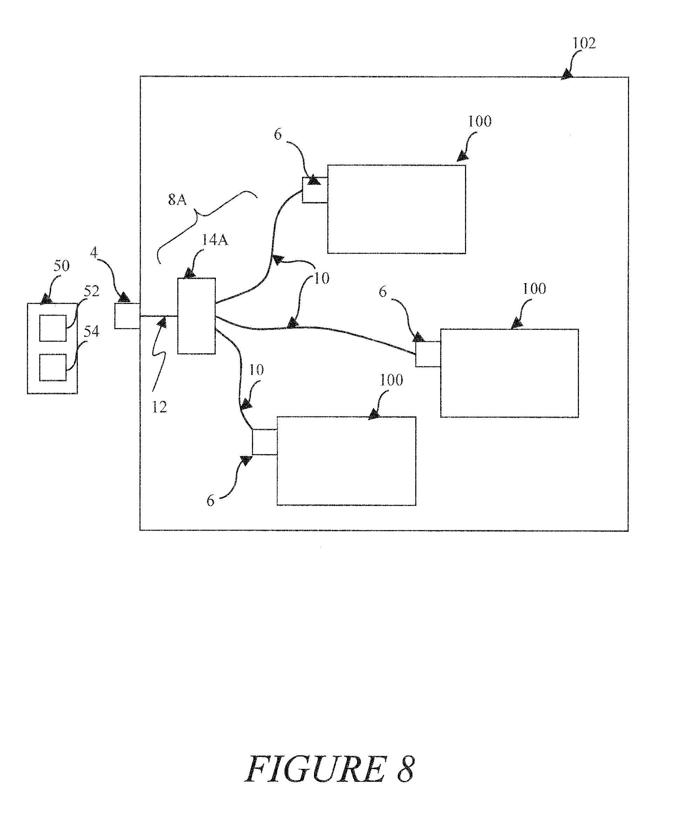

Figure 8 illustrates an exemplary scenario applied to the system 2 of Figure 1. In Figure 8, the marker tags 6 are placed on items 100 that are to be tracked. The items 100 may be, but not limited to, electronic boards, an assembled unit forming one component, or mechanical parts. The items 100 are in an enclosure 102. The enclosure 102 may be, but not limited to, a sealed electric box, a sealed metal box, or an electrical cabinet, so that RF signals may not pass through the enclosure 102.

The marker tags 6 are connected to the master tag 4 through the wired connection system 8A. The master tag 4 may be the master tag 4A of Figure 3 or the master tag 4B of Figure 5. In Figure 8, the junction box 14A is located in the enclosure 102. However, the junction box 14A may be located outside the enclosure 102.

The master tag 4 is located at a place where it is easily readable by the RFID reader 50. The RFID reader 50 may be a hand-held RFID reader or a fix reading station having RFID reader functions. The RFID reader 50 may communicate with an external computer-based device and use a wired or some other wireless radio protocols to communicate with that computer-based device. The RFID reader 50 may include a user interface, such as a display, input devices and sound devices.

In Figure 8, the master tag 4 is mounted on the external side of the enclosure 102. In an other example, the master tag 4 may be outside the enclosure 102 and be separated from the enclosure 102. The cable 12 connected to the master tag 4 goes inside the enclosure 102.

The RFID reader 50 sends the RF energy through its antenna 52 to the master tag 4. The master tag 4 transmits the energy to the marker tags 6 through the wired connection system 8A. Once the marker tags 6 have waked up, the RFID reader 50 communicates with the marker tags 6 through the master tag 4, and can address a particular marker tag or a particular memory block of that particular marker according to the tag communication protocol.

In an example, the IDs of all marker tags are scanned and reported under the control of the RFID reader 50. In another example, a particular field stored in the memory (e.g., a memory block 26A, 26B, or 26C of Figure 2) for each tag is scanned and reported under the control of the RFID reader 50. In a further example, a particular memory field for a particular tag is scanned and reported under the control of the RFID reader 50.

Identification information and particular information associated with the marker tag 6 and the item 100 is collected at the master tag 4. Thus, the information in the marker tag 6 is readable without opening the enclosure 102.

The enclosure 102 may be a shield, electrical cabinet in a train or a vehicle (hereinafter referred to as cabinet 102). The master tag 4 may be placed underneath the train or vehicle or on the side or top of the train or vehicle.

When updating the list of serial numbers of the items 100 in the cabinet 102, all IDs of the marker tags 6 are read through the master tag 4. After performing a particular maintenance operation, the operator of the RFID reader 50 may update a particular field of a marker tag through the master tag 4.

When replacing the item 100, an operator removes the connector (e.g., 32 of Figure 2, 92 of Figures 7A and 7C) from the marker tag 6, and replaces the item 100 with a new item that is fitted with its proper new marker tag. The operator reconnects the connector to the new marker tag. When the system tracks the new item, information on the new marker tag is read.

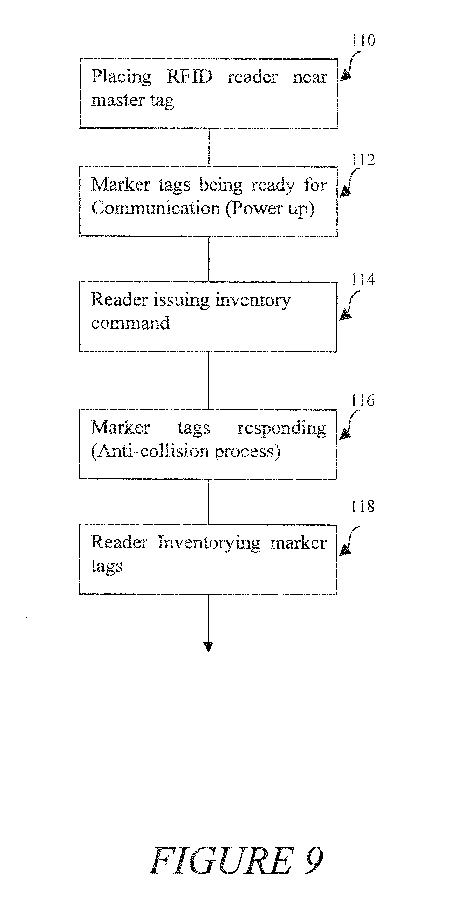

Figure 9 illustrates an example of a method of operating the system 2 of Figure 1. Referring to Figures 1 and 9, an RFID reader (e.g., 50 of Figures 4, 6 and 8) is placed near the master tag 4 (step 110). The RFID reader sends the RF energy to the master tag 4, which transmits this energy to the marker tags 6 through the wired connection system 8. The marker tags 6 connected to the master tag 4 are powered up and are ready to communicate with the RFID reader (step 112). The RFID reader issues a tag inventory command (step 114). Each marker tag 6 makes a response using its unique ID (step 116). If a collision occurs, the RFID reader detects the collision. The collision is resolved by the anti-collision mechanism. The anti-collision process is implemented until there are no more collisions and the RFID reader identifies all marker tags 6 connected to the master tag 4. Once the RFID reader has inventories all marker tags connected to the master tag 4 (step 118), the RFID reader can access an individual marker tag through the master tag 4 for reading or reading and writing operations.

In Figure 9, the master tag 4 (e.g., 4B of Figure 5) may respond to the RFID reader in accordance with the anti-collision mechanism, using its unique ID.

In Figure 9, the marker tags 6 are operated through the master tag 4. However, in another example, the marker tags 6 may directly respond to the RFID reader. In this example, the marker tag 6 is placed within the RF field of the RFID reader. The marker tag 6 is powered up by signals directly received from the RFID reader. The RFID reader directly obtains the ID of the marker tag 6.

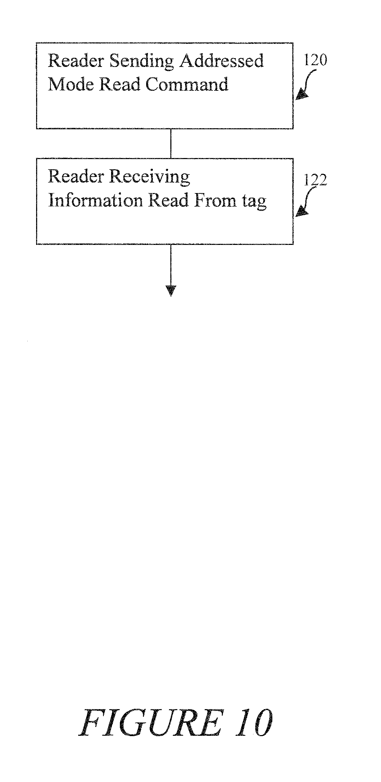

Figure 10 illustrates an example of a method for read mode operation for the system 2 of Figure 1. Referring to Figures 1 and 10, the RFID reader (e.g., 50 of Figures 4, 6 and 8) has the IDs of the marker tags 6. The master tag 4 is within the RF field of the RFID reader. The RFID reader sends an addressed mode read command to a particular marker tag 6, and a particular memory block in the particular marker tag 6 (step 120). The unique ID allocated to each marker tag is used to access that particular marker tag. The RFID reader receives through the master tag 4 information read from the particular memory block in the particular marker tag 6 (step 122). The addressed mode read command is, for example, based on ISO 15693-3 tag protocol.

In Figure 10, the RFID reader may read information from the master tag 4 (e.g., 4B of Figure 5), using the tag's unique ID.

In Figure 10, the marker tags 6 are operated through the master tag 4. However, in another example, the RFID reader may directly read information from the marker tag 6. In this example, the marker tag 6 is placed within the RF field of the RFID reader.

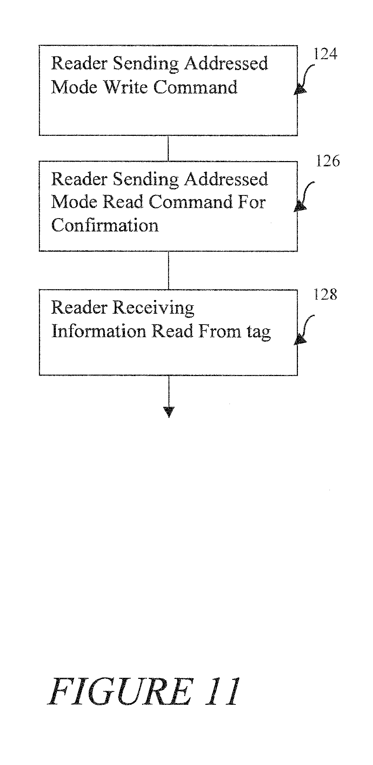

Figure 11 illustrates an example of a method for write mode operation for the system 2 of Figure 1. Referring to Figures 1 and 11, the RFID reader (e.g., 50 of Figures 4, 6 and 8) has the IDs of the marker tags 6. The master tag 4 is within the RF field of the RFID reader. The RFID reader sends an addressed mode write command to a particular marker tag, and a particular memory block in the particular marker tag 6 (step 124). The unique ID allocated to each marker tag is used to access a particular marker tag. For confirmation, the RFID reader sends an addressed mode read command to check that the reading has been completed (step 126), similar to the step 120 of Figure 10. The RFID reader receives through the master tag 4 information read from the particular memory block in the particular marker tag 6 (step 128), similar to the step 122 of Figure 10. The addressed mode read command and the addressed mode write command are, for example, based on ISO 15693-3 tag protocol.

In Figure 11, the RFID reader may implement the write and read operation on the master tag 4 (e.g., 4B of Figure 5), using the tag's unique ID.

In Figure 11, the marker tags 6 are operated through the master tag 4. However, in another example, the RFID reader may directly write information on the marker tag 6. In this example, the marker tag 6 is placed within the RF field of the RFID reader.

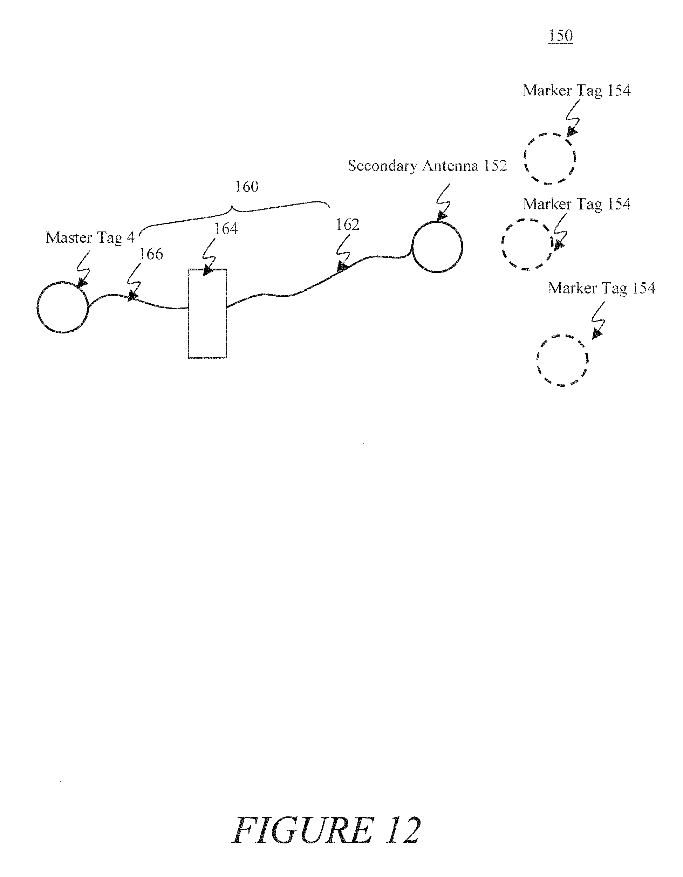

Figure 12 illustrates an example of a monitoring system 150 in accordance with another embodiment of the present invention. The system 150 includes a secondary antenna 152 for one or more than one marker tag 154, and a wired connection system 160 for connecting the secondary antenna 152 and the master tag 4. The secondary antenna 152 may be a coil antenna. The marker tag 154 is applied to an item that is to be traced. In the description, "154" may represent "(individual) marker tag" or "(a group of) marker tags".

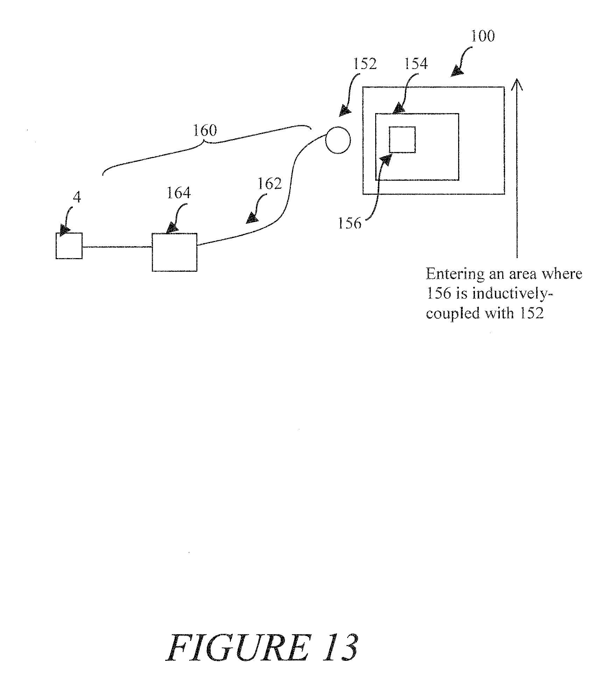

The marker tag 154 may be same or similar to the tag module 20 of Figure 2. The marker tag 154 contains a primary antenna (e.g., 156 of Figure 13) and RF tag functions. The marker tag 154 contains readable information or readable/writeable information in its memory block(s), e.g., a unique ID. The marker tag 154 does not include a secondary antenna.

The secondary antenna 152 may be same or similar to the secondary antenna 30 of Figure 2. The secondary antenna 152 and the primary antenna (e.g., 156 of Figure 13) of each marker tag 154 are coupled by inductive-coupling.

The wired connection system 160 includes a cable 162 that is connected to the secondary antenna 152. The cable 162 may be detachably connected to the secondary antenna 152. The wired connection system 160 may include a connection module 164 for connecting the cable 162 to the master tag 4. The connection module 164 may be same or similar to the connection module 14 of Figure 1. The connection module 164 may be a junction box (e.g., 14A of Figures 4, 6 and 8). The wired connection system 160 may further include a cable 166 for connecting the master tag 4 to the cable 162. In another example, the master tag 4 may be directly wired-connected to the secondary antenna 152 without using the connection module 164. The cable 162 may be a twisted pair cable or a coax cable. The cable 166 may be a twisted pair cable or a coax cable. The wired connection system 160 may be same or similar to the wired connection system 8 of Figure 1 or 8A of Figures 4, 6 and 8.

In Figure 12, one master tag 4 is shown. However, the number of the master tag 4 is not limited to one and may vary in dependence upon the system design or requirements. In Figure 12, one secondary antenna 152 is shown. However, the number of the secondary antenna 152 is not limited to one and may vary in dependence upon the system design or requirements. In another example, one master tag 4 may be connected to a plurality of secondary antennas 152. In Figure 12, three marker tags 154 are shown. However, these marker tags 154 are representative only. In Figure 12, one cable 162 is shown. However, the number of the cables 162 is not limited to one and depends on the number of the secondary antennas 152. A plurality of cables 162 may be connected to the master tag 4 through the connection module 164.

The system 150 may include a plurality of secondary antennas 152 and a plurality of master tags 4, and each master tag 4 may represent one secondary antenna 152 or a group of secondary antennas 152.

Figure 13 illustrates an exemplary scenario applied to the system 150 of Figure 12. The marker tag 154 is allocated to an item 100 that is to be traced. The marker tag 154 is, for example, placed on a frame of the item 100. The secondary antenna 152 is located at a particular position/location. The item 100 is moved into a certain area associated with the particular position of the secondary antenna 152 when it is to be tracked. When the item 100 approaches and moves into that area, a link between the secondary antenna 152 and the marker tag 154 is established. The marker tag 154 is seen by the secondary antenna 152 (inductive-coupling).

The marker tag 154 is, for example, a passive tag. The marker tag 154 is energized by signals that are received through the wired connection system 160 or the secondary antenna 152, or received directly at its antenna 156.

The marker tag 154 is an RFID read tag or an RFID read-write tag. An RFID reader (e.g., 50, Figures 4, 6 and 8) may implement the operation processes on the marker tag 154, similar to those of Figures 9-11. The RFID reader accesses the marker tag 154 through the master tag 4. The RFID reader may directly operate on the marker tags 154. A memory block in the marker tag 154 may be read or read/written by the RFID reader using tag protocols. A particular memory block in a particular marker tag 154 may be read or read/written by the RFID reader using tag protocols (e.g., ISO 15693-3).

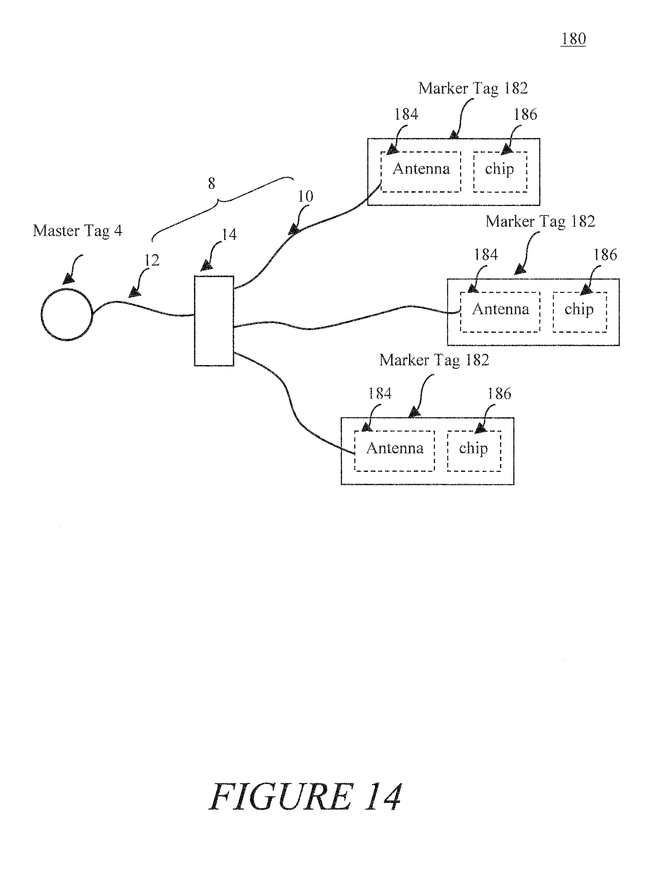

In the above embodiments, the marker tag (i.e., 6 of Figure 2, 154 of Figure 13) communicates with RFID readers using the secondary antenna (i.e., 30 of Figure 2, 152 of Figure 13) where the secondary antenna is directly connected to the wired connection system (i.e., 8 of Figure 2, 160 of Figure 13). In a further embodiment, the tag antenna of the marker tag is directly connected to the wired connection system as shown in Figure 14.

Figure 14 illustrates an example of a monitoring system 180 in accordance with a further embodiment of the present invention. The system 180 includes a group of marker tags 182. The marker tag 182 includes a tag module containing a unique ID. The marker tag 182 may be an RFID read tag or an RFID read/write tag. The marker tag 182 may employ a standard design of RFID circuit and operate in accordance with ISO tag standards (e.g., ISO 15693 protocols). The marker tag 182 is applied to an item that is to be traced.

Each marker tag 182 has a tag antenna 184 and a chip 186. The tag antenna 184 and the chip 186 form a single tag module. The marker tag 182 is accessed through the tag antenna 184. The tag antenna 184 may be a coil antenna. The chip 186 has a unique address and can be addressed uniquely through a tag protocol (e.g., ISO 15693 protocols).

The tag antenna 184 is physically connected to the cable 10. The tag antenna 184 may be detachably connected to the cable 10 via a connector similar to the connector 32 of Figure 3. The marker tags 182 communicate with RFID readers (e.g., 50 of Figures 4, 6, and 8) via the wired connection system 8. The marker tags 182 are readable and writable via the master tag 4. The marker tags 182 are controlled through the master tag 4.

In Figure 14, the tag antenna 184 and the chip 186 are shown separately. However, the tag antenna 184 and the chip 186 may be integrated into one circuit board and may be in physical or electrical or magnetic contact with each other.

The marker tag 182 may be same or similar to the tag module 20 of Figure 2. The tag antenna 184 may be same or similar to the primary antenna 22 of Figure 2. The chip 186 may be same or similar to the chip 24 of Figure 2, and includes a logic circuit and a memory having one or more than one memory block. A particular memory block in a particular marker tag 154 may be read or read/written by the RFID reader using tag protocols (e.g., ISO15693-3). The system 180 of Figure 14 may be operated in accordance with the steps of Figures 9-11.

The marker tag 182 is a passive RFID tag. The marker tag 182 derives its energy based on signals received through the cable 10 or signals directly received by the tag antenna 184.

In Figure 14, three marker tags 182 are shown. However, the number of the marker tags 182 is not limited to three and may vary in dependence upon the system design or requirements. In Figure 14, one master tag 4 is shown. However, the number of the master tag 4 is not limited to one and may vary in dependence upon the system design or requirements. In a further example, one master tag 4 may be connected to one marker tag 182 in a one to one relationship.

The master tag 4 in the above embodiments may be same or similar to the marker tag 182. The tag antenna of the master tag 4 may be directly connected to the wired connection system (i.e., 8 of Figures 1 and 14, 160 of Figure 12). The wired connection system 8 of Figures 1 and 14 may be same or similar to the wired connection system 160 of Figure 12. The system 180 may include the wired connection system 160 of Figure 12.

The present invention has been described with regard to one or more embodiments. However, it will be apparent to persons skilled in the art that a number of variations and modifications can be made without departing from the scope of the invention as defined in the claims.

## Claims

1. A system (2, 150, 180) for monitoring one or more than one item, **characterized by** comprising:
a master tag (4, 4A, 4B) operable in a Radio Frequency field of a Radio Frequency Identification, RFID, reader (50); and
a connection system (2, 150, 180; 8, 8A, 10, 12, 14, 14A) for accessing one or more than one marker tag (6, 154, 182) allocated to the one or more than one item, respectively, through conductive coupling, each of the one or more than one marker tag including a unique identification and being operable by the RFID reader;
the connection system (2, 150, 180) being conductively coupled with the master tag (4, 4A, 4B) and including a cable (10, 12, 94, 162, 166) for coupling each of the one or more than one marker tag to the master tag (4, 4A, 4B) so that each of the one or more than one marker tag (6, 154, 182) is readable through the conductive coupling by the RFID reader (50).

2. The system (2, 150, 180) as claimed in claim 1, wherein a data signal, energy or a combination thereof is transferable from the RFID reader to each of the one or more than one marker tag (6, 154, 182) through the conductive coupling.

3. The system (2, 150, 180) as claimed in claim 1 or 2, wherein each of the one or more than one marker tag (6, 154, 182) is writable with the RFID reader through the conductive coupling.

4. The system (2, 150, 180) as claimed in any one of claims 1 to 3, wherein each of the one or more than one marker tag (6, 154, 182) is operable in accordance with an anti-collision mechanism.

5. The system (2, 150, 180) as claimed in claim 2, wherein each of the one or more than one marker tag (6, 154, 182) comprises a passive tag module.

6. The system (2, 150, 180) as claimed in any one of claims 1 to 4, wherein each of the one or more than one marker tag (6) comprises a tag module (20) having a first antenna (22) and further comprises a second antenna (30), the second antenna (30) being conductively coupled with the master tag (4), wherein a cable (10) is connected to the second antenna (30) of each of the one or more than one marker tag (6).

7. The system (2, 150, 180) as claimed in claim 6, wherein the tag module (20) and the second antenna (30) form a single module.

8. The system (2, 150, 180) as claimed in claim 7, wherein the single module comprises a layered structure including a first layer (82) and a second layer (84), and wherein the first layer (82) comprises the first antenna (22) and the second layer (84) comprises the second antenna (30).

9. The system (2, 150, 180) as claimed in claim 6 or 7, wherein the second antenna (30) is inductively coupled with the first antenna (22) so that the tag module (20) is readable via the second antenna (30).

10. The system (2, 150, 180) as claimed in any of claims 6-9, wherein the second antenna (30) is detachably connected to the cable (10).

11. The system (2, 150, 180) as claimed in any one of claims 6-10, wherein the connection system (2, 150, 180) comprises a junction box (14A) for connecting the cable to the master tag (4, 4A, 4B).

12. The system (2, 150, 180) as claimed in any one of claims 5 to11, wherein the RFID reader (50) is in a fixed RFID reading equipment, and wherein the tag module is readable with the RFID reader by locating the item with the marker tag (6) in a position associated with the second antenna (152).

13. The system (2, 150, 180) as claimed in any one of claims 5 to11, wherein the RFID reader (50) is in a fixed RFID reading equipment, and wherein the master tag (4, 4A, 4B) is readable with the RFID reader by locating the master tag in the RF field of the RFID reader.

14. The system (2, 150, 180) as claimed in any one of claims 5-11, wherein the RFID reader (50) is a handheld RFID reader, and wherein the tag module is readable with the handheld RFID reader.

15. The system (2, 150, 180) as claimed in any one of claims 5-11, wherein the RFID reader is a handheld RFID reader, and wherein the master tag is readable with the handheld RFID reader by locating the handheld RFID reader or the master tag so that the master tag is in the RF field of the handheld RFID reader.

16. The system (2, 150, 180) as claimed in any one of claims 1 to 4, wherein the master tag (4, 4A, 4B) comprises a first antenna (40A, 40B), and wherein the first antenna (40A, 40B) is conductively coupled with the connection system (2, 150, 180) and is accessible by the RFID reader.

17. The system (2, 150, 180) as claimed in claim 16, wherein the master tag (4B) comprises a read tag module or a read/write tag module operable by the RFID reader and having a second antenna (62), and wherein the second antenna is inductively coupled with the first antenna and is accessible by the RFID reader.

18. The system (2, 150, 180) as claimed in any previous claim, wherein the master tag is operable in accordance with an anti-collision mechanism.

19. A system for monitoring an item, comprising:
a tag module (20) including a unique Identification, ID, and a first antenna (22), the tag module (20) being operable by a Radio Frequency Identification, RFID, reader; and
a second antenna (30, 152) for accessing the tag module (20), the second antenna (30, 152) being conductively coupled through conductive coupling with a master tag (4, 4A, 4B) operable in a Radio Frequency, RF, field of the RFID reader, the second antenna (30, 152) being inductively coupled with the first antenna (22) so that the tag module (20) is readable through a combination of conductive and inductive coupling by the RFID reader (50).

20. A method of monitoring one or more than one item, comprising the steps of:
allocating (110) one or more than one marker tag (6, 154, 182) to the one or more than one item, respectively, each of the one or more than one marker tag comprising a unique identification, ID, and being operable by a Radio Frequency Identification, RFID, reader (50); and
accessing the one or more than one marker tag (6, 154, 182) through conductive coupling, including conductively coupling a master tag operable by the RFID reader (50) with a connection system (2, 150, 180) (8, 8A, 10, 12, 14, 14A) for accessing the one or more than one marker tag (6, 154, 182) via a cable (10, 12, 94, 162, 166), and reading (118) the one or more than one marker tag (6, 154, 182) with the RFID reader (50) through the master tag (4, 4A, 4B).

21. A method in accordance with claim 20, further comprising either:
a) placing (110) the RFID reader (50) near the master tag (4);
the RFID reader (50) sending RF energy to the master tag (4);
the master tag (4) transmitting the energy to the marker tags (6) through the wired connection system (2, 150, 180) (8), thereby powering up (112) the marker tags (6) ready to communicate with the RFID reader (50);
the RFID reader (50) issuing (114) a tag inventory command;
each marker tag (6) responding (116) using its unique ID (step 116);
the RFID reader (50) identifying and thereby inventorying (118) all marker tags (6) connected to the master tag (4);
or
b) placing a marker tag (6) within the RF field of the RFID reader (50);
powering up the marker tag (6) by signals directly received from the RFID reader (50);
the RFID reader (50) directly obtaining the ID of the marker tag (6).

22. A method in accordance with claim 20 or claim 21, further comprising a method for read mode operation, comprising either:
a) placing the master tag (4) within the RF field of the RFID reader (50);
the RFID reader (50) sending (120) an addressed mode read command to a marker tag (6), and a particular memory block in the marker tag (6);
the RFID reader (50) receiving (122), through the master tag (4), information read from the particular memory block in the particular marker tag (6);
or
b) placing the marker tag (6) within the RF field of the RFID reader (50); and
the RFID reader (50) directly reading information from the marker tag (6).

23. A method in accordance with any of claims 20-22, further comprising a method for write mode operation, comprising either:
a) placing the master tag (4) within the RF field of the RFID reader (50);
the RFID reader (50) sending (124) an addressed mode write command to a marker tag (6), and a particular memory block in the marker tag (6), using the unique ID allocated to the marker tag (6) to access the marker tag (6); and
for confirmation, the RFID reader (50) sending (126) an addressed mode read command to check that the reading has been completed;
the RFID reader (50) receiving (128), through the master tag (4), information read from the particular memory block in the marker tag (6);
or
b) placing the marker tag (6) within the RF field of the RFID reader (50); and
the RFID reader (50) directly writing information on the marker tag (6).

24. A method in accordance with any of claims 20-23, further comprising, when monitoring more than one item:
the RFID reader (50) detecting a collision between responses from two different marker tags (6); and
applying an anti-collision mechanism to resolve the collision; and
applying the anti-collision mechanism until there are no more collisions.

## Patentansprüche

1. System (2, 150, 180) zur Überwachung eines oder mehrerer Items, **dadurch gekennzeichnet, dass** es umfasst:
ein Mastertag (4, 4A, 4B), das in einem Funkfrequenzfeld eines RFID-Lesers (50) (RFID = Funkfrequenzidentifikation) betreibbar ist; und
ein Verbindungssystem (2, 150, 180; 8, 8A, 10, 12, 14, 14A) zum Zugriff auf ein oder mehrere Markierungstags (6, 154, 182), die jeweils einem oder mehreren Items zugeordnet sind, durch eine leitfähige Kopplung, wobei jedes von dem einen oder den mehreren Markierungstags umfasst: eine eindeutige Identifikation und dass sie durch den RFID-Leser betreibbar sind;
dass das Verbindungssystem (2, 150, 180) leitfähig an das Mastertag (4, 4A, 4B) gekoppelt ist und umfasst: ein Kabel (10, 12, 94, 162, 166) zur Kopplung eines jeden des einen oder der mehreren Markierungstags an das Mastertag (4, 4A, 4B), so dass jedes von dem einen oder den mehreren Markierungstags (6, 154, 182) durch die leitfähige Kopplung durch den RFID-Leser (50) lesbar ist.

2. System (2, 150, 180) gemäß Anspruch 1, wobei ein Datensignal, eine Energie, oder eine Kombination davon von dem RFID-Leser an jedes von dem einen oder den mehreren Markierungstags (6, 154, 182) durch die leitfähige Kopplung übertragbar ist.

3. System (2, 150, 180) gemäß Anspruch 1 oder 2, wobei jedes von dem einen oder den mehreren Markierungstags (6, 154, 182) durch die leitfähige Kopplung durch den RFID-Leser beschreibbar ist.

4. System (2, 150, 180) gemäß einem der Ansprüche 1 bis 3, wobei jedes von dem einen oder den mehreren Markierungstags (6, 154, 182) gemäß einem Antikollisionsmechanismus betreibbar ist.

5. System (2, 150, 180) gemäß Anspruch 2, wobei jedes von dem einen oder den mehreren Markierungstags (6, 154, 182) ein passives Tagmodul umfasst.

6. System (2, 150, 180) gemäß einem der Ansprüche 1 bis 4, wobei jedes von dem einen oder den mehreren Markierungstags (6) ein Tagmodul (20) umfasst, das über eine erste Antenne (22) verfügt, und weiterhin eine zweite Antenne (30) umfasst, wobei die zweite Antenne (30) leitfähig an das Mastertag (4) gekoppelt ist, wobei ein Kabel (10) an die zweite Antenne (30) von jedem von dem einen oder den mehreren Markierungstags (6) angeschlossen ist.

7. System (2, 150, 180) gemäß Anspruch 6, wobei das Tagmodul (20) und die zweite Antenne (30) ein einzelnes Modul bilden.

8. System (2, 150, 180) gemäß Anspruch 7, wobei das einzelne Modul eine geschichtete Struktur umfasst, die eine erste Schicht (82) und eine zweite Schicht (84) umfasst, und wobei die erste Schicht (82) die erste Antenne (22) umfasst und die zweite Schicht (84) die zweite Antenne (30) umfasst.

9. System (2, 150, 180) gemäß Anspruch 6 oder 7, wobei die zweite Antenne (30) induktiv an die erste Antenne (22) gekoppelt ist, so dass das Tagmodul (20) über die zweite Antenne (30) lesbar ist.

10. System (2, 150, 180) gemäß den Ansprüchen 6 - 9, wobei die zweite Antenne (30) abnehmbar mit dem Kabel (10) verbunden ist.

11. System (2, 150, 180) gemäß einem der Ansprüche 6 - 10, wobei das Verbindungssystem (2, 150, 180) eine Anschlussdose (14A) zur Verbindung des Kabels mit dem Mastertag (4, 4A, 4B) umfasst.

12. System (2, 150, 180) gemäß einem der Ansprüche 5 bis 11, wobei der RFID-Leser (50) in einer festen RFID-Leseausrüstung untergebracht ist und wobei das Tagmodul mit dem RFID-Leser lesbar ist, durch Lokalisierung des Items mit dem Markierungstag (6) in eine Position, die mit der zweiten Antenne (152) verknüpft ist.

13. System (2, 150, 180) gemäß einem der Ansprüche 5 bis 11, wobei der RFID-Leser (50) in einer festen RFID-Leseausrüstung untergebracht ist und wobei das Mastertag (4, 4A, 4B) mit dem RFID-Leser lesbar ist, durch Lokalisierung des Mastertags in das RF-Feld des RFID-Lesers.

14. System (2, 150, 180) gemäß einem der Ansprüche 5 - 11, wobei der RFID-Leser (50) ein Handheld-RFID-Leser ist und wobei das Tagmodul mit dem Handheld-RFID-Leser lesbar ist.

15. System (2, 150, 180) gemäß einem der Ansprüche 5 - 11, wobei der RFID-Leser ein Handheld-RFID-Leser ist und wobei das Mastertag mit dem Handheld-RFID-Leser lesbar ist, durch Lokalisation des Handheld-RFID-Lesers oder des Mastertags, so dass sich das Mastertag in dem RF-Feld des Handheld-RFID-Lesers befindet.

16. System (2, 150, 180) gemäß einem der Ansprüche 1 bis 4, wobei das Mastertag (4, 4A, 4B) eine erste Antenne (40A, 40B) umfasst und wobei die erste Antenne (40A, 40B) leitfähig an das Verbindungssystem (2, 150, 180) gekoppelt und durch den RFID-Leser zugänglich ist.

17. System (2, 150, 180) gemäß Anspruch 16, wobei das Mastertag (4B) ein Lesetagmodul oder ein Lese-/Schreibtagmodul umfasst, das durch den RFID-Leser betrieben werden kann und über eine zweite Antenne (62) verfügt, und wobei die zweite Antenne leitfähig an die erste Antenne gekoppelt und durch den RFID-Leser zugänglich ist.

18. System (2, 150, 180) gemäß einem der vorangehenden Ansprüche, wobei das Mastertag gemäß einem Antikollisionsmechanismus betreibbar ist.

19. System zur Überwachung eines Items, umfassend:
ein Tagmodul (20), das umfasst: eine eindeutige Identifikation, ID, und eine erste Antenne (22), wobei das Tagmodul (20) durch einen RFID-Leser (RFID = Funkfrequenzidentifikation) betreibbar ist; und
eine zweite Antenne (30, 152) zum Zugreifen auf das Tagmodul (20), wobei die zweite Antenne (30, 152) leitfähig durch eine leitfähige Kopplung an ein Mastertag (4, 4A, 4B) gekoppelt ist, das in einem RF-Feld des RFID-Lesers betreibbar ist, und wobei die zweite Antenne (30, 152) induktiv an die ersten Antenne (22) gekoppelt ist, so dass das Tagmodul (20) durch eine Kombination des leitfähigen und induktiven Koppelns durch den RFID-Leser (50) lesbar ist.

20. Verfahren zur Überwachung eines oder mehrerer Items, das die folgenden Schritte umfasst:
Zuordnung (110) eines oder mehrerer Markierungstags (6, 154, 182) zu jeweils einem oder den mehreren Items, wobei jedes von dem einen oder den mehreren Markierungstags umfasst: eine eindeutige Identifikation, ID, und dass es durch einen RFID-Leser (50) (RFID = Funkfrequenzidentifikation) betreibbar ist; und
Zugriff auf das eine oder die mehreren Markierungstags (6, 154, 182) durch eine leitfähige Kopplung, die umfasst: leitfähige Kopplung eines Mastertags, das durch den RFID-Leser (50) betreibbar ist, mit einem Verbindungssystem (2, 150, 180) (8, 8A, 10, 12, 14, 14A) zum Zugriff auf den einen oder die mehreren Markierungstags (6, 154, 182) über ein Kabel (10, 12, 94, 162, 166) und Lesen (118) des einen oder der mehreren Markierungstags (6, 154, 182) mit dem RFID-Leser (50) durch das Mastertag (4, 4A, 4B).

21. Verfahren gemäß Anspruch 20, das weiterhin umfasst, entweder:
a) Platzierung (110) des RFID-Lesers (50) nahe dem Mastertag (4);
dass der RFID-Leser (50) RF-Energie an das Mastertag (4) sendet;
dass das Mastertag (4) die Energie an die Markierungstags (6) durch das verdrahtete Verbindungssystem (2, 150, 180) (8) überträgt, wodurch die Markierungstags (6) eingeschaltet werden (112), bereit um mit dem RFID-Leser (50) zu kommunizieren;
dass der RFID-Leser (50) einen Tagbestandsbefehl ausgibt (114);
dass jedes Markierungstag (6) unter Verwendung seiner eindeutigen ID antwortet (116) (Schritt 116);
dass der RFID-Leser (50) alle Markierungstags (6), die mit dem Mastertag (4) verbunden sind, identifiziert und dadurch inventarisiert (118);
oder
b) Platzierung eines Markierungstags (6) in das RF-Feld des RFID-Lesers (50);
Einschalten des Markierungstags (6) durch Signale, die direkt von dem RFID-Leser (50) empfangen werden;
dass der RFID-Leser (50) die ID des Markierungstags (6) direkt erhält.

22. Verfahren gemäß Anspruch 20 oder Anspruch 21, das weiterhin umfasst: ein Verfahren zum Lesebetriebsartbetrieb, das umfasst, entweder:
a) Platzierung des Mastertags (4) in das RF-Feld des RFID-Lesers (50);
dass der RFID-Leser (50) einen adressierten Betriebsartlesebefehl an ein Markierungstag (6) und einen besonderen Speicherblock in dem Markierungstag (6) sendet (120);
dass der RFID-Leser (50) durch das Mastertag (4) Informationen empfängt (122), die aus dem besonderen Speicherblock in dem besonderen Markierungstag (6) gelesen werden;
oder
b) Platzierung des Markierungstags (6) in das RF-Feld des RFID-Lesers (50); und dass der RFID-Leser (50) Informationen direkt aus dem Markierungstag (6) liest.

23. Verfahren gemäß einem der Ansprüche 20 - 22, das weiterhin umfasst: ein Verfahren zum Lesebetriebsartbetrieb, das umfasst, entweder:
a) Platzierung des Mastertags (4) in das RF-Feld des RFID-Lesers (50);
dass der RFID-Leser (50) einen adressierten Betriebsartschreibbefehl an das Markierungstag (6) und einen besonderen Speicherblock in dem Markierungstag (6) sendet (124), unter Verwendung der eindeutigen ID, die dem Markierungstag (6) zugeordnet ist, um auf das Markierungstag (6) zuzugreifen; und
dass, zur Bestätigung, der RFID-Leser (50) einen adressierten Betriebsartlesebefehl sendet (126), um zu prüfen, dass das Lesen abgeschlossen worden ist;
dass der RFID-Leser (50) durch das Mastertag (4) Informationen empfängt (128), die aus dem besonderen Speicherbefehl in dem Markierungstag (6) gelesen werden;
oder
b) Platzierung des Markierungstags (6) in das RF-Feld des RFID-Lesers (50); und dass der RFID-Leser (50) Informationen direkt auf das Markierungstag (6) schreibt.

24. Verfahren gemäß einem der Ansprüche 20 - 23, das, wenn mehr als ein Item überwacht wird, weiterhin umfasst:
dass der RFID-Leser (50) eine Kollision zwischen Antworten von verschiedenen Markierungstags (6) detektiert; und
Anwendung eines Antikollisionsmechanismus, um die Kollision zu beseitigen; und
Anwendung des Antikollisionsmechanismus, bis es keine weiteren Kollisionen gibt.

## Revendications

1. Système (2, 150, 180) pour surveiller un ou plus d'un article, **caractérisé en ce qu'**il comporte :
une étiquette maîtresse (4, 4A, 4B) fonctionnant dans le domaine des radiofréquences d'un lecteur d'identification par radiofréquences, RFID, (50) ; et
un système de connexion (2, 150, 180 ; 8, 8A, 10, 12, 14, 14A) pour accéder à une ou plus d'une étiquette de marqueur (6, 154, 182) allouée à un ou plus d'un article, respectivement, par l'intermédiaire d'un couplage conducteur, chacune d'une ou de plus d'une étiquette de marqueur comprenant une identification unique et pouvant fonctionner grâce au lecteur RFID ;
le système de connexion (2, 150, 180) étant couplé de manière conductrice à l'étiquette maîtresse (4, 4A, 4B) et comprenant un câble (10, 12, 94, 162, 166) pour coupler chacune de l'une ou de plus d'une étiquette de marqueur à l'étiquette maîtresse (4, 4A, 4B) de sorte que chacune d'une ou de plus d'une étiquette de marqueur (6, 154, 182) peut être lue par l'intermédiaire du couplage conducteur par le lecteur RFID (50).

2. Système (2, 150, 180) selon la revendication 1, dans lequel un signal de données, une énergie ou un une combinaison de ceux-ci peuvent être transférés depuis le lecteur RFID à chacune de l'une ou de plus d'une étiquette de marqueur (6, 154, 182) par l'intermédiaire du couplage conducteur.

3. Système (2, 150, 180) selon la revendication 1 ou 2, dans lequel chacune de l'une ou de plus d'une étiquette de marqueur (6, 154, 182) peut être écrite avec le lecteur RFID par l'intermédiaire du couplage conducteur.

4. Système (2, 150, 180) selon l'une quelconque des revendications 1 à 3, dans lequel chacune de l'une ou de plus d'une étiquette de marqueur (6, 154, 182) peut fonctionner conformément à un mécanisme anticollision.

5. Système (2, 150, 180) selon la revendication 2, dans lequel chacune de l'une ou de plus d'une étiquette de marqueur (6, 154, 182) comporte un module d'étiquette passive.

6. Système (2, 150, 180) selon l'une quelconque des revendications 1 à 4, dans lequel chacune de l'une ou de plus d'une étiquette de marqueur (6) comporte un module d'étiquette (20) possédant une première antenne (22) et comporte en outre une seconde antenne (30), la seconde antenne (30) étant couplée de manière conductrice avec l'étiquette maîtresse (4), dans lequel un câble (10) est relié à la seconde antenne (30) de chacune de l'une ou de plus d'une étiquette de marqueur (6).

7. Système (2, 150, 180) selon la revendication 6, dans lequel le module d'étiquette (20) et la seconde antenne (30) forment un module unique.

8. Système (2, 150, 180) selon la revendication 7, dans lequel le module unique comporte une structure stratifiée comprenant une première couche (82) et une seconde couche (84), et dans lequel la première couche (82) comporte la première antenne (22) et la seconde couche (84) comporte la seconde antenne (30).

9. Système (2, 150, 180) selon la revendication 6 ou 7, dans lequel la seconde antenne (30) est couplée de manière inductive à la première antenne (22) de sorte que le module d'étiquette (20) peut être lu par l'intermédiaire de la seconde antenne (30).

10. Système (2, 150, 180) selon l'une quelconque des revendications 6-9, dans lequel la seconde antenne (30) est reliée de façon amovible au câble (10).

11. Système (2, 150, 180) selon l'une quelconque des revendications 6-10, dans lequel le système de connexion (2, 150, 180) comporte une boîte de jonction (14A) pour relier le câble à l'étiquette maîtresse (4, 4A, 4B).

12. Système (2, 150, 180) selon l'une quelconque des revendications 5 à 11, dans lequel le lecteur RFID (50) se trouve dans un équipement de lecture RFID fixe, et dans lequel le module d'étiquette peut être lu par le lecteur RFID en localisant l'article avec l'étiquette de marqueur (6) dans une position associée à la seconde antenne (152).

13. Système (2, 150, 180) selon l'une quelconque des revendications 5 à 11, dans lequel le lecteur RFID (50) se trouve dans un équipement de lecture RFID fixe, et dans lequel l'étiquette maîtresse (4, 4A, 4B) peut être lue par le lecteur RFID en localisant l'étiquette maîtresse dans le domaine RF du lecteur RFID.

14. Système (2, 150, 180) selon l'une quelconque des revendications 5 à 11, dans lequel le lecteur RFID (50) est un lecteur RFID portatif, et dans lequel le module d'étiquette peut être lu avec le lecteur RFID portatif.

15. Système (2, 150, 180) selon l'une quelconque des revendications 5-11, dans lequel le lecteur RFID est un lecteur RFID portatif, et dans lequel l'étiquette maîtresse peut être lue par le lecteur RFID portatif en localisant le lecteur RFID portatif ou l'étiquette maîtresse de sorte que l'étiquette maîtresse se trouve dans le domaine RF du lecteur RFID portatif.

16. Système (2, 150, 180) selon l'une quelconque des revendications 1 à 4, dans lequel l'étiquette maîtresse (4, 4A, 4B) comporte une première antenne (40A, 40B), et dans lequel la première antenne (40A, 40B) est couplée de façon conductrice au système de connexion (2, 150, 180) et est accessible par le lecteur RFID.

17. Système (2, 150, 180) selon la revendication 16, dans lequel l'étiquette maîtresse (4B) comporte un module d'étiquette de lecture ou un module d'étiquette de lecture/écriture pouvant fonctionner grâce au lecteur RFID et possédant une seconde antenne (62), et dans lequel la seconde antenne est couplée de manière inductive à la première antenne et est accessible par le lecteur RFID.

18. Système (2, 150, 180) selon l'une quelconque des revendications précédentes, dans lequel l'étiquette maîtresse peut fonctionner conformément à un mécanisme anti- collision.

19. Système pour surveiller un article, comportant :
un module d'étiquette (20) comprenant une identification unique, ID, et une première antenne (22), le module d'étiquette (20) pouvant fonctionner grâce à un lecteur d'identification par radiofréquences, RFID ; et
une seconde antenne (30, 152) pour accéder le module d'étiquette (20), la seconde antenne (30, 152) étant couplée de manière conductive par l'intermédiaire d'un couplage conductif à une étiquette maîtresse (4, 4A, 4B) fonctionnant dans un domaine de radiofréquences, RF, du lecteur RFID, la seconde antenne (30, 152) étant couplée de manière inductive à la première antenne (22) de sorte que le module d'étiquette (20) peut être lu par l'intermédiaire d'une combinaison d'un couplage conductif et inductif par le lecteur RFID (50).

20. Procédé de surveillance d'un ou de plus d'un article, comportant les étapes consistant à :
allouer (110) une ou plus d'une étiquette de marqueur (6, 154, 182) à un ou plus d'un article, respectivement, chacune de l'une ou de plus d'une étiquette de marqueur comportant une identification unique, ID, et pouvant fonctionner grâce à un lecteur d'identification par radiofréquences, RFID, (50) ; et
accéder à une ou plus d'une étiquette de marqueur (6, 154, 182) par l'intermédiaire d'un couplage conducteur, comprenant le couplage de manière conductrice d'une étiquette maîtresse fonctionnant grâce au lecteur RFID (50) à un système de connexion (2, 150, 180) (8, 8A, 10, 12, 14, 14A) pour accéder à une ou plus d'une étiquette de marqueur (6, 154, 182) par l'intermédiaire d'un câble (10, 12, 94, 162, 166), et lire (118) l'une ou plus d'une étiquette de marqueur (6, 154, 182) avec le lecteur RFID (50) par l'intermédiaire de l'étiquette maîtresse (4, 4A, 4B).

21. Procédé selon la revendication 20, comportant en outre soit :
a) le placement (110) du lecteur RFID (50) près de l'étiquette maîtresse (4) ;
le lecteur RFID (50) envoyant une énergie RF à l'étiquette maîtresse (4) ;
l'étiquette maîtresse (4) transmettant l'énergie aux étiquettes de marqueur (6) par l'intermédiaire du système de connexion câblé (2, 150, 180) (8), mettant ainsi sous tension (112) les étiquettes de marqueur (6) prêtes à communiquer avec le lecteur RFID (50) ;
le lecteur RFID (50) émettant (114) une commande d'inventaire d'étiquettes ;
chaque étiquette de marqueur (6) répondant (116) en utilisant son unique ID (étape 116) ;
le lecteur RFID (50) identifiant et ainsi inventoriant (118) toutes les étiquettes de marqueur (6) reliées à l'étiquette maîtresse (4) ;
soit
b) le placement d'une étiquette de marqueur (6) à l'intérieur du domaine RF du lecteur RFID (50) ;
la mise sous tension de l'étiquette de marqueur (6) par des signaux reçus directement depuis le lecteur RFID (50) ;
le lecteur RFID (50) obtenant directement l'ID de l'étiquette de marqueur (6).

22. Procédé selon la revendication 20 ou la revendication 21, comportant en outre un procédé pour une opération en mode lecture, comportant soit :
a) le placement de l'étiquette maîtresse (4) à l'intérieur du domaine RF du lecteur RFID (50) ;
le lecteur RFID (50) envoyant (120) une commande de lecture en mode adressé à une étiquette de marqueur (6), et un bloc de mémoire particulier dans l'étiquette de marqueur (6) ;
le lecteur RFID (50) recevant (122), par l'intermédiaire de l'étiquette maîtresse (4), une information lue depuis le bloc de mémoire particulier dans l'étiquette de marqueur particulière (6) ;
soit
b) le placement de l'étiquette de marqueur (6) à l'intérieur du domaine RF du lecteur RFID (50) ; et
le lecteur RFID (50) lisant directement une information à partir de l'étiquette de marqueur (6).

23. Procédé selon l'une quelconque des revendications 20-22, comportant en outre un procédé pour une opération en mode écriture, comportant soit :
a) le placement de l'étiquette maîtresse (4) dans le domaine RF du lecteur RFID (50) ;
le lecteur RFID (50) envoyant (124) une commande en mode écriture adressée à une étiquette de marqueur (6), et un bloc de mémoire particulier dans l'étiquette de marqueur (6), en utilisant l'unique ID allouée à l'étiquette de marqueur (6) pour accéder à l'étiquette de marqueur (6) ; et
pour confirmation, le lecteur RFID (50) envoyant (126) une commande en mode lecture adressée pour contrôler que la lecture a été achevée ;
le lecteur RFID (50) recevant (128), par l'intermédiaire de l'étiquette maîtresse (4), une information lue depuis le bloc de mémoire particulier dans l'étiquette de marqueur (6) ;
soit
b) le placement de l'étiquette de marqueur (6) dans le domaine RF du lecteur RFID (50) ; et
le lecteur RFID (50) écrivant directement une information sur l'étiquette de marqueur (6).

24. Procédé selon l'une quelconque des revendications 20-23, comportant en outre, lors de la surveillance de plus d'un article :
le lecteur RFID (50) détectant une collision entre des réponses provenant de deux étiquettes de marqueur différentes (6) ; et
appliquant un mécanisme anticollision pour résoudre la collision ; et
appliquant le mécanisme anticollision jusqu'à ce qu'il n'y ait plus de collisions.
